# EUROPEAN PATENT SPECIFICATION

(11) **EP 2 927 806 B1**
(45) Date of publication and mention of the grant of the patent: **26.12.2018**
(21) Application number: 14163082.2
(22) Date of filing: 01.04.2014
(51) Int. Cl.: G06F 1/32, G06F 9/30, G06F 9/38

(54) **Integrated circuit, electronic device and ic operation method**
Integrierte Schaltung, elektronische Vorrichtung und Betriebsverfahren für integrierte Schaltung
Circuit intégré, dispositif électronique et procédé de fonctionnement de circuit intégré

(43) Date of publication of application: 07.10.2015
(73) Proprietor: NXP B.V., 5656 AG Eindhoven (NL)
(72) Inventor: FATEMI, Hamed, Redhill, Surrey RH1 1SH (GB); SHARMA, Vibhu, Redhill, Surrey RH1 1SH (GB)
(74) Representative: Hardingham, Christopher Mark

(56) References cited:
- US-A1- 2005 102 560

## Description

The present invention relates to an integrated circuit (IC) comprising a set of data processing units including a first data processing unit and a plurality of second data processing units operable at variable frequencies.

The present invention further relates to an electronic device comprising such an IC.

The present invention yet further relates to a method of operating such an IC.

Over the last few decades, the development of ICs has seen the emergence of very large scale integration (VLSI) circuits in which billions of transistors are integrated on modest silicon real estate, e.g. a few millimetres squared. This mainly has been driven by the downscaling of the feature size of the semiconductor elements, e.g. transistors, used to design and manufacture such ICs.

At present, it is entirely feasible to manufacture ICs using sub-micron sized components. Indeed, ICs are being produced in technologies such as CMOS with a typical feature size of less than 100 nm, e.g. 65 or 90 nm. According to Moore's law, these feature sizes will continue to shrink in years to come.

Nevertheless, the reduction of such feature sizes is causing problems that are directly related to this reduction. The consequential increase in component density means that controlling power dissipation per unit area, e.g. heat generation, is now becoming one of the main challenges in facilitating further size reductions.

Traditionally, one of the principal design paradigms at least for ICs intended to process large volumes of digital data has been the optimization of throughput, typically through introduction of parallelism such as instruction level parallelism in which a single instruction stream is scheduled and split over multiple and independent computational units. Examples of such ICs include the Pentium® processor manufactured by the Intel Corporation and the Power PC® processor manufactured by the AIM alliance. However, in moving forward, it is unlikely that such design paradigms can be applied to further miniaturized ICs given the heat generation by such levels of parallelisms.

An approach to control the power dissipation of an IC that has gained popularity over the last decade or so is dynamic voltage and frequency scheduling (DVFS). In this approach, the operating frequency of (parts of) an IC may be reduced, e.g. by lowering the operating voltage, to reduce the power consumption of the IC. This approach unsurprisingly has proven particularly popular in application domains where power supply is limited, e.g. battery-powered electronic devices. An example of such a DVFS approach is disclosed in US2009/049314. However, DVFS is considered less suitable for application domains in which throughput performance is important due to its negative impact thereon.

United States patent application publication number US2005/0102560 A1 discloses a processor system, instruction sequence optimization device, and instruction sequence optimization program. In this disclosure, in order to reduce power consumption of a processor system including a plurality of processors without degradation of the processing ability, a CPU detects mode setting information added to instruction code and outputs a clock control signal and a power supply voltage control signal to a clock controlling section and a power supply voltage controlling section, respectively. When a plurality of processing engines execute an instruction in parallel, clock signals with a frequency lower than a predetermined frequency and power supply voltages lower than a predetermined voltage are supplied. As a result, power consumption is reduced and the processing ability is maintained by the parallel execution.

The present application seeks to disclose an IC that is capable of providing a trade-off between throughput and power consumption requirements.

The present application further seeks to disclose an electronic device comprising such an IC.

The present application yet further seeks to disclose a method of operating an integrated circuit in a manner that achieves the aforementioned trade-off.

According to a first aspect, there is provided an integrated circuit comprising a set of data processing units including a first data processing unit operable at a full operating frequency and N second data processing units operable at a reduced operating frequency, wherein N is an integer having a value of at least 2; an instruction scheduler adapted to evaluate data dependencies between individual instructions in a received plurality of instructions to identify dependent instructions in said plurality having said data dependencies and independent instructions in said plurality not having said data dependencies; assign the dependent instructions to the first data processing unit for serial execution on the first data processing unit at the full operating frequency; and assign the independent instructions to the plurality of second data processing units for parallel execution on said second data processing units at the reduced operating frequency.

Consequently, at the reduced operating frequency, the loss of throughput caused by the reduction in operating frequency is compensated by (parallel) execution of the instructions over the second data processing units. In this manner, it may be ensured that at lower power levels throughput is maintained whilst still achieving a reduction in power consumption due to the fact that the power consumption scales with the operating voltage squared (P ∼ V_{dd}²).

In an embodiment, the reduced operating frequency is defined such that the throughput of independent instructions executed by the plurality of second data processing units matches the throughput of dependent instructions executed by the first data processing unit or at most differs from the throughput of dependent instructions executed by the first data processing unit by less than a defined threshold. This ensures that at lower power levels throughput is maintained or at least does not deviate from the throughput at full operating frequency by more than an acceptable amount as defined by the threshold. For instance, f_{red} = f_{full}/N, in which f_{red} is the reduced operating frequency and f_{full} is the nominal or full operation frequency of the second data processing units.

In some embodiments, the operating frequency may be dynamically adjusted in accordance with the level of data dependency between the instructions to be executed. To this end, the instruction scheduler may be further adapted to generate a control signal indicative of the presence of said data dependencies, the integrated circuit further comprising a controller for adjusting said operating frequency in response to said control signal.

The controller may be arranged to define the reduced operating frequency as a function of the number of independent instructions to be executed in parallel on said second data processing elements, i.e. f_{red} = f_{full}/M, in which M is the number of instructions that can be executed in parallel. This allows for different numbers of instructions to be executed in parallel at different points in time, thereby increasing the operating flexibility of the IC.

The operating frequency of each second data processing element may be individually defined, and wherein the controller may be arranged to define the reduced operating frequency of a subset of said second data processing elements, the number of second data processing units in said subset matching the number of independent instructions in said received plurality of instructions. This may further improve energy efficiency, for instance because unused second data processing units may be disabled or otherwise switched to a low power consuming state.

The controller may be adapted to set the reduced operating frequency by controlling the voltage of the second data processing units in response to said control signal.

The controller may be inactive in the first power mode.

The controller may be adapted to provide a clock gating signal to the second data processing units during execution of the dependent instructions; and/or provide a clock gating signal to the first data processing unit during execution of the independent instructions.

Additionally or alternatively, the instruction scheduler may be adapted to send no-operation (NOP) instructions to the second data processing units during execution of the dependent instructions; and/or send no-operation (NOP) instructions to the first data processing unit during execution of the independent instructions. These measures ensure that the energy consumption by inactive data processing units is further reduced; e.g. minimized.

The IC typically further comprises a memory for storing said instructions. In an embodiment, the IC comprises a data communication bus between the memory and the instruction scheduler; wherein the memory is adapted to receive a memory address from an address generation unit, the instruction scheduler is adapted to receive the plurality of instructions corresponding to said memory address from said memory over said data communication bus; and wherein the number of instructions in said plurality is a multiple of the number of data processing units in said set. This has the advantage that the use of a shared data bus for instruction and address communication does not lead to an increased latency in instruction scheduling, as the instruction scheduler obtains several sets of instructions in the clock cycles in which the instruction scheduler receives these instructions, such that the instruction scheduler can still issue instructions to the set of data processing units during clock cycles in which data is communicated over the data communication bus.

In an embodiment, the instruction scheduler further comprises a first buffer for storing a firstly received plurality of instructions and a second buffer for storing data-dependent instructions from received plurality of instructions. This allows the instruction scheduler to buffer instructions of which the data dependencies are yet to be evaluated as well as to buffer instructions that have been evaluated but cannot be issued to the data processing units in a single clock cycle because of data dependencies between them.

The IC may further comprise a program counter controller adapted to update a program counter in response to the control signal, which program counter for instance may reside in the instruction scheduler. This for instance ensures that the program counter controller can update the program counter without having to specifically check if the instruction belonging to the actual program counter value has been executed.

The first data processing unit may comprise an interrupt handler, wherein the program counter controller is further responsive to the interrupt handler. This is particularly advantageous if the first data processing unit is a master unit and the second data processing units are slave units, such that the master unit can control the flushing of all the data processing units upon the occurrence of such an interrupt. By making the program counter controller further responsive to the interrupt handler, the program counter controller can calculate the appropriate value of the program counter from the control signal and a signal from the interrupt handler indicating the occurrence of an exception, e.g. an interrupt, branch or jump instruction.

In an embodiment, the second data processing units are permanently operable at the reduced operating frequency, e.g. the operating frequency of the second data processing units may not be adjustable. This facilitates a relatively straightforward implementation of the IC.

In accordance with another aspect, there is provided an electronic device comprising the integrated circuit according to one of the aforementioned embodiments. Such an electronic device may have a limited power supply, e.g. a battery, which may be a rechargeable battery, and benefits from the improved throughput of the IC in low power mode. The electronic device may be any suitable device, such as, but not limited to, desktop computers, laptop computers, tablet computers, mobile phones, smart phones, personal digital assistants, GPS navigation devices, identification devices, automotive devices, domestic appliances and so on.

In accordance with yet another aspect, there is provided a method of operating an integrated circuit according to any of the above embodiments, the method comprising evaluating data dependencies between individual instructions in the plurality of instructions to identify dependent instructions in said plurality having said data dependencies and independent instructions in said plurality not having said data dependencies; assigning the dependent instructions to the first data processing unit; assigning the independent instructions to the plurality of second data processing units for parallel execution on said second data processing units; executing the dependent instructions on the first data processing unit at the full operating frequency; and executing the independent instructions on the second data processing units at the reduced operating frequency.

This method provides an operating mode for an IC in which power consumption can be reduced if necessary wherein the consequential loss of throughput performance may be avoided altogether or at least reduced.

Embodiments are described in more detail and by way of non-limiting examples with reference to the accompanying drawings, wherein:
FIG. 1 schematically depicts an IC according to an embodiment;
FIG. 2 schematically depicts an IC according to another embodiment;
FIG. 3 schematically depicts an aspect of an IC according to an embodiment;
FIG. 4 schematically depicts another aspect of an IC according to an embodiment;
FIG. 5 schematically depicts yet another aspect of an IC according to an embodiment; and
FIG. 6 schematically depicts a flowchart of a method according to an embodiment.

It should be understood that the Figures are merely schematic and are not drawn to scale. It should also be understood that the same reference numerals are used throughout the Figures to indicate the same or similar parts.

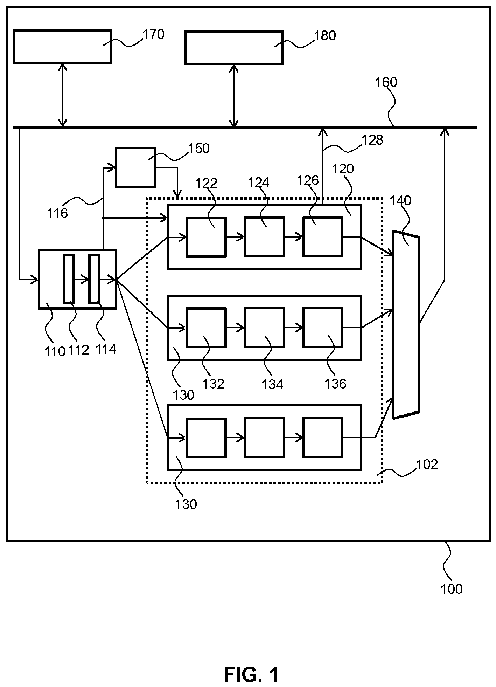

FIG. 1 schematically depicts an IC 100 according to an embodiment. The IC 100 comprises an instruction scheduler 110 for scheduling instructions to a first or master data processing unit 120 and a plurality of second or slave data processing units 130. Two slave data processing units 130 are shown by way of non-limiting example; it should be understood that the IC 100 may comprise N of such slave data processing units 130 in which N is a positive integer having a value of 2 or more, e.g. N=2, 3, 4, 5, and so on. In a non-limiting embodiment, the IC 100 comprises two slave data processing units 130 (i.e. N=2).

The master data processing unit 120 typically comprises an instruction fetch unit 122, a control unit 124 and an instruction execution unit 126. The slave data processing units 130 typically comprise an instruction fetch unit 132, a control unit 134 and an instruction execution unit 136. The fetch and control units typically decode the instruction received from the instruction scheduler 110 and send the appropriate addresses and control signals to the associated register files and instruction execution units as is well known per se in the art. The instruction execution units 126 and 136 execute the instructions and store the result either in register files, e.g. in case the result is to be used in a subsequent instruction, or in data memory 180.

The IC 100 may further comprise a multiplexing unit 140 for combining the data outputs of the master data processing unit 120 and the slave data processing units 130. In an embodiment, the multiplexing unit 140 is controlled by the instruction scheduler 110. The data outputs of the master data processing unit 120 and the slave data processing units 130 are communicatively coupled to a data communications bus 160, which may be shared with the instruction scheduler 110, although it is equally feasible to include separate data communication buses for communication between the instruction scheduler 110 and the memory 170 on the one hand and between the master data processing unit 120 and the at least one slave data processing unit 130 and instruction memory 170 and data memory 180 on the other hand.

Although the instruction memory 170 and data memory 180 are shown as separate entities, it will be immediately apparent to the skilled person that any suitable memory architecture may be used, e.g. a shared memory architecture comprising a first memory portion for storing instructions to be provided to the instruction scheduler 110 and a second portion for storing data to be processed by the master data processing unit 120 and the slave data processing units 130.

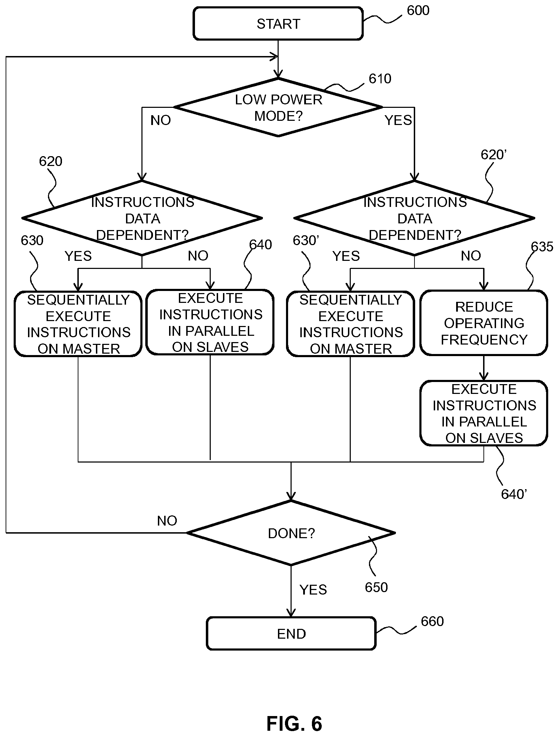

The operation of the IC 100 will now be explained in more detail with the aid of FIG. 6, which depicts a flow chart of an embodiment of the instruction scheduling method. Upon initialization in step 600, the IC 100 is configured in step 610 to operate in a selected power mode. The IC may be configured to operate in a full power mode or may be configured to operate in a reduced power mode. Such power modes may be selected based on certain conditions.

For instance, in a scenario in which the IC 100 is not required to save power, e.g. because an unlimited power source such as mains power is being used or because a limited power source such as a battery is not near depletion, the master data processing unit 120 and the slave data processing units 130 may be operated at their maximum operating frequency, such that the throughput of the IC 100 is improved when executing data-independent instructions in parallel on the slave data processing units 130.

However, in an alternative scenario, the IC may be configured to switch from a full power mode to a reduced power mode upon indication that a battery is becoming depleted or the temperature of the IC has reached a critical value.

The selection of the power mode of the IC 100 has implications for the operating mode of the IC, as symbolized by branching step 610 in FIG. 6. If the IC is to operate in a full power mode the method proceeds to step 620, in which the instruction scheduler 110 is configured to evaluate the received instructions in order to detect data dependencies between these instructions. In the presence of such data dependencies, parallel execution of the instructions is not possible, and the method proceeds to step 630 in which the instructions are executed on the first processing unit 120, i.e. on the master data processing unit, only. At the same time, the slave data processing units 130 may be clock-gated or provided with no-operation (NOP) instructions in order to reduce the power consumed by the slave data processing units 130. Issuing NOP instructions has the advantage that the state of the slave data processing units 130 remains unaltered, which is more power-efficient.

Similarly, where parallel execution of the instructions is possible, the method proceeds to step 640 in which the instructions are executed in parallel on the slave data processing units 130, thereby improving throughput of the IC 100. In this full power mode, the operating frequency of the slave data processing units 130 remains at the maximum or full operating frequency, e.g. the same operating frequency as the master data processing unit 120, thereby improving throughput by up to a factor N if all N slave data processing units 130 are issued with an instruction to be executed in parallel. In some embodiments where N>2, not all of the N slave data processing units 130 may receive a data-independent instruction for parallel execution as will be explained in more detail below.

During the parallel execution of data-independent instructions on the slave data processing units 130, the master data processing unit 120 may be used for other calculations, e.g. the execution of dependent instructions that do not depend from data used or produced in the simultaneous parallel execution of the independent instructions on the slave data processing units 130, or the execution of other tasks or instructions during the parallel execution of the aforementioned instructions. Alternatively, the master data processing unit 120 may be may be clock-gated or provided with no-operation (NOP) instructions in order to reduce the power consumed by the master data processing unit 120 during the parallel execution of data-independent instructions in step 640. Issuing NOP instructions has the advantage that the state of the master data processing unit 120 remains unaltered, which is more power-efficient.

The first power mode is maintained until a change in power mode is requested as checked in step 610 or until the computational task performed by the IC 100 has completed, as checked in step 650.

If the IC 100 is to be operated in the low power mode in which power is to be preserved or the activity of the slave data processing elements 130 is to be reduced for other reasons, e.g. because the IC 100 is approaching a critical temperature, the instruction scheduler 110 evaluates the received instructions in step 620' and issues data-dependent instructions to the master data processing unit 120 only in step 630' without adjusting its operating frequency.

However, if instructions can be executed in parallel, the method proceeds to step 635 in which the operating frequency of the slave data processing units 130 is reduced. In an embodiment, the operating frequency of the slave data processing units 130 is scaled by factor 1/M in which M is the number of instructions to be executed in parallel. This is for instance relevant when N>2 and M<N, i.e. the number of instructions that can be executed in parallel is smaller than the number of slave data processing units 130 in the IC 100. This ensures that a relatively constant throughput of instructions when compared with a string of instructions executed sequentially at full operating frequency, as M instructions are executed in parallel at an operating or clock frequency of f/M.

Alternatively, if constant throughput is not required, the operating frequency of the slave data processing units 130 may be reduced to f/N regardless of the value of M, i.e. regardless of the number of instructions to be executed in parallel. This has the advantage that a controller of the operating frequency of the slave data processing units 130 does not have to be made aware of the number of instructions to be executed in parallel in a given clock cycle, thus simplifying the design of the IC 100.

Upon adjusting the operating frequency of the slave data processing units 130, the method proceeds to step 640' in which the slave data processing units 130 execute these instructions at the adjusted, e.g. reduced, operating frequency. It is subsequently checked in step 650 if the execution is complete, with the method terminating in step 660 if this is the case or returning to step 610 otherwise. As before, idle processing units may be clock- gated or issued with NOP instructions in this embodiment to save power and/or the first data processing unit 120 may perform additional tasks during parallel execution of independent instructions on the second data processing units 130. For instance, in an embodiment where M of N slave data processing units 130 are issued with independent instructions to be executed in parallel, wherein M<N, the remaining slave data processing units 130 may be clock-gated or issued with NOP instructions to save power.

In an embodiment, the instruction scheduler 110 is configured to receive a plurality of instructions from memory 170, in which the plurality of instructions is an integer multiple of the total number of second processing units 130 to which the instruction scheduler 110 issues instructions to be executed in parallel. This is particularly advantageous if the IC 100 comprises a data communications bus 160 that is used for both address and instruction communications to and from memory 170. In such a scenario, the instruction scheduler 110 only receives instructions from memory 170 every other clock cycle, i.e. during the clock cycles not used for sending the instruction addresses to the memory 170.

In order to hide this latency, the instruction scheduler 110 preferably receives a sufficient number of instructions for issuing to the slave data processing units 130 over at least two clock cycles such that during the clock cycles in which addresses are communicated over the data communication bus 160, the instruction scheduler 110 still has a pool of instructions to issue to the master or slave data processing units 120, 130. The master data processor 120 typically takes more clock cycles to consume these instructions anyway because of the sequential execution of these instructions. To this end, the instruction scheduler 110 may comprise a first buffer 112 and a second buffer 114 for storing the sets of instructions to be issued to the master or slave data processing units 120, 130. The second buffer 114 is typically used temporarily store the data-dependent instructions that cannot be immediately issued.

The main task of the instruction scheduler 110 is to check the dependency between the instructions and issue the instructions to the master or slave data processing units 120, 130 in accordance with the observed dependencies. For instance, in an example in which the IC 100 comprises a master data processing unit 120 and a pair of slave data processing units 130, the instruction scheduler 110 may receive four instructions (A, B, C, D) in a single clock cycle. For the sake of simplicity of this non-limiting example it will be assumed that dependencies can only exist between instructions A, B and C, D respectively and that instruction execution will be done in the same order, i.e. no out of order execution taking place. This leads to the various instruction execution scenarios shown in Table I:

**Table I**

| Dependency evaluation result | Master 120 | Slaves 130 |
|---|---|---|
| A,B independent | NOP | A, B |
| C,D independent | NOP | C, D |
| A,B dependent | A | NOP |
| C,D independent | B | NOP |
| | NOP | C, D |
| A,B independent | NOP | A, B |
| | C | NOP |
| C,D dependent | D | NOP |
| A,B dependent | A | NOP |
| C,D dependent | B | NOP |
| | C | NOP |
| | D | NOP |

It is however pointed out for the avoidance of doubt that the present embodiments are not limited to the above scenarios, and that it should be immediately apparent that more complex dependency scenarios can also be handled by the IC 100 according to certain embodiments, e.g. if the IC 100 comprises more than two slave data processing units 130. Moreover, the issuing of NOP instructions is shown by way of non-limiting example only as it has been previously explained that idle processing units instead may be clock-gated or otherwise deactivated. In addition, the master data processing unit 120 may perform alternative tasks instead as previously explained.

In an embodiment, the instruction scheduler 110 is adapted to detect the following type of dependencies in the plurality of instructions:
- Branch: If one of the instructions is a branch instruction, then the instruction scheduler 110 distributes instruction pairs (A, B or C, D) as dependent instructions. The branch is only executed in the master data processing unit 120 as will be explained in more detail below.
- Read after write (RAW) dependencies: the result of an earlier instruction (A/C) is an input of a later instruction (B/ D). In such a scenario, the earlier instruction must store the result, e.g. write it into a register before the later instruction can be executed.
- Resource conflict: such conflicts can occur if the IC 100 uses a single data communication bus 160 for accessing memory 170, e.g. when two instructions in the plurality of instructions both require access to the data communication bus 160, such that parallel execution of these instructions needs to be avoided.
- Write after read (WAR) dependencies: such dependencies can occur if an earlier instruction takes several clock cycles to complete and the later instruction has to write to an operand of the earlier instruction, thus introducing the risk that the earlier instruction can be corrupted if the later instruction is executed in parallel.

In an embodiment, the dependency evaluation performed by the instruction scheduler 110 is used to adjust the operating frequency and voltage at which the IC 100 is to operate in the second power mode, for instance by determining the value of M, wherein M is the number of instructions that can be issued in parallel in a given clock cycle. This for instance be used to determine the scaling factor of the operating frequency of the slave data processing units 130; i.e. f_{reduced} = f_{full}/M, wherein f_{reduced} is the reduced operating frequency and f_{full} is the maximum operating frequency of the slave data processing units 130. Where M<N, the remaining N-M instructions may be data dependent instructions that are to be executed sequentially as previously explained. The instruction scheduler 110 may be arranged to fetch the next N instructions once the previous N instructions are executed, i.e. once the M data-independent instructions are executed in parallel and the M-N data-dependent instructions are sequentially executed.

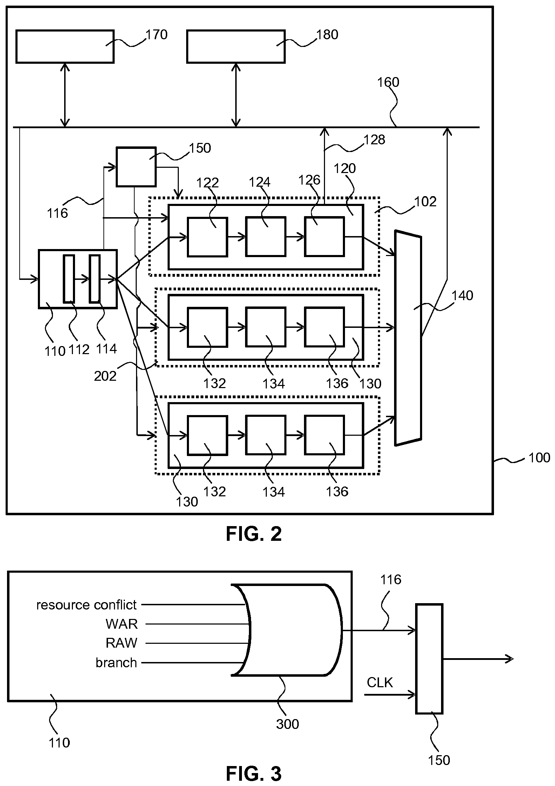

In an embodiment, the IC 100 may further comprise a controller 150 responsive to the instruction scheduler 110 to control the frequency and/or voltage at which the slave data processing units 130 operate during parallel execution of independent instructions in a power-saving mode. The controller 150 may be responsive to a control signal 116 issued by the instruction scheduler 110 that indicates if the instruction scheduler 110 is issuing a dependent instruction. This may for example be achieved as shown in FIG. 3. The instruction scheduler 112 may comprise a control signal generator 300, e.g. a logic gate such as a four-input OR gate that generates the control signal 116 if at least one of the aforementioned dependencies has been detected. The control signal 116 is forwarded to the controller 150, which in the absence of such dependencies as indicated by the control signal 116 may scale down the operating voltage of the master data processing unit 120 and the one or more slave data processing units 130, e.g. as per the implementation as shown in FIG. 6. In an alternative embodiment (not shown), the instruction scheduler 110 may issue the controller 150 with a control signal indicating the number of instructions to be executed in parallel, i.e. issues the number M to the controller 150. This is for instance relevant when N>2, such that it is not always guaranteed that each of the N slave data processing units 130 is issued with an instruction to be executed in parallel, i.e. M<N. In this embodiment, the controller 150 may use the received value of M as the scaling factor of the nominal operating frequency of the slave data processing units 130 as previously explained.

In FIG. 1, the master data processing unit 120 and the slave data processing units 130 are located in a single power domain 102 controlled by the controller 150. In an alternative embodiment, the slave data processing units 130 may be deactivated in a full power mode, i.e. the parallel execution of the plurality of instructions only takes place in a reduced power mode, which for instance may be suitable if there is no need to further increase throughput of the IC 100 beyond the required minimum throughput levels. This may be achieved by sending the one or more slave data processing units 130 NOP instructions only during the full power mode. Alternatively, as shown in FIG. 2, the master data processing unit 120 may be located in a first power domain 102 controlled by the controller 150 and the slave data processing units 130 may be located in a second power domain 202 under control of the controller 150.

In the embodiment of FIG. 2, the second power domain 202 may be kept at a different voltage from the first power domain, e.g. the second power domain 202 may be kept at a reduced voltage such that the second or slave data processing units 130 may operate at a reduced operating frequency relative to the operating frequency of the main or master data processing unit 120. This embodiment is particularly suitable if the master data processing unit 120 is expected to perform additional tasks during the parallel execution of meaningful instructions by the slave data processing units 130 as previously explained.

Although not explicitly shown, each slave data processing unit 130 may be located in a separate voltage domain, wherein each voltage domain may be individually controlled by the controller 150. This for instance may be used to select the number of slave data processing units 130 to be used in the parallel processing of independent instructions. Specifically, where the IC 100 comprises more than two slave data processing units 130, the controller 150 may be informed by the instruction scheduler 110 how many instructions are to be executed in parallel, e.g. M instructions in which M is a positive integer of at least 2 as previously mentioned. The controller 150 may select M voltage domains comprising slave data processing units 130, with the voltage of each voltage domain being scaled by a factor M. The remaining voltage domains comprising unused slave data processing units 130 may be powered down or alternatively all voltage domains comprising slave data processing units 130 may be provided with a voltage scaled by the factor M, with unused slave data processing units 130 being provided with NOP instructions or being clock-gated instead.

In an embodiment, the master data processing unit 120 is arranged to execute all types of instructions, e.g. branch instructions, computational instructions and so on. Therefore, in the first, e.g. full, power mode the master data processing unit 120 is chosen to execute the (meaningful) instructions sequentially whilst the slave data processing units 120 may be provided with NOP instructions only or may be otherwise disabled as explained in more detail above. For this reason, the master processor unit 120 may be in charge of updating the program counter of the IC 100. However, as during parallel execution, e.g. in a low power mode, the master data processing unit 120 will not be responsible for the execution of independent instructions, the master data processing unit 120 needs to be informed of such parallel execution. This may be achieved by the control signal 116.

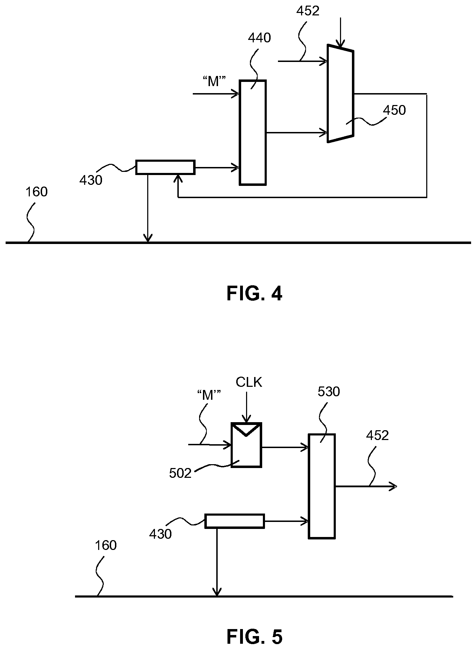

A non-limiting example of logic suitable to update the program counter in this manner is shown in FIG. 4. In this non-limiting example, the master data processing unit 120 comprises an adder 440 that adds the number M' of instructions to be executed per clock cycle to the value of the program counter in program counter register 430. M' typically is 1 when a data-dependent instruction is to be executed and M' = M when M data-independent instructions are to be executed in parallel. This result is passed onto a multiplexer 450 that receives the output of the adder 440 as a first input and the output of an interrupt handler as a second input, as will be explained in more detail below. The multiplexer 450 may be controlled by the interrupt handler, such that in the absence of such an interrupt the program counter in register 430 is updated in accordance with the output produced by the adder 440.

Alternatively, the master data processing unit 120 may operate at full operating frequency compared to the slave processing units 130 operating at a fraction of this full operating frequency, e.g. f_{red} = f_{full}/M with M being the number of instructions being executed in parallel. In other words, the master data processing unit 120 operates at a (clock) frequency that is a multiple M of the (clock) frequencies of the slave processing units 130, such that a single increment of the program counter in each clock cycle of the master data processing unit 120 would equate to the total number of instructions processed in parallel after M clock cycles of the master data processing unit 120.

The instruction scheduler 110 may further comprise an address generator unit (not shown) that forwards a range of addresses to the instruction memory 170 over the data communication bus 160 in order to facilitate delivery of the next plurality of instructions to the instruction scheduler 110. The program counter architecture shown in FIG. 4 may form part of the address generator unit. Alternatively, the address generator unit may reside in any other suitable location e.g., in the controller 150.

As already mentioned, in some embodiments the master data processing unit 120 may be further responsible for handling interrupts to the flow of instructions processed by the master data processing unit 120 or the slave data processing units 130. Upon the occurrence of such an interrupt, the master data processing unit 120 will flush the current instructions from the fetch unit 122 and the control unit 124 of the master data processing unit 120 and from the fetch unit 132 and the control unit 134 of the slave data processing units 130.

A non-limiting example embodiment of the portion of the program counter circuitry responsible for updating the program counter in case of the occurrence of such an interrupt is shown in FIG. 5. If an interrupt occurs, the program counter needs to be restored to its value in the clock cycle preceding the instruction causing the interrupt. To this end, this portion of the program counter may comprise a memory element 502 such as a flip-flop or a latch for delaying the progression of this signal by one clock cycle. This delay may of course be implemented in any suitable alternative manner, e.g. using a chain of delay elements such as inverters. The control signal 116 may be inverted by an inverter 510 for the same reasons as explained in the detailed description of FIG. 4.

The variable M' is provided as the input of a subtraction element 530 arranged to subtract the variable 'M" from the current value of the program counter in program counter register 430 and to produce the subtraction result as output signal 452. Hence, if the flow of instructions is interrupted, the interrupt handler will instruct the multiplexer 450 to update the program counter using output signal 452.

At this point, it is noted that the above embodiments of the IC 100 have been described in the context of a full power mode and a reduced power mode of the IC 100, wherein in the reduced power mode the operating frequency of the slave data processing units 130 is reduced as previously explained. It should however be understood that the full power mode in which operating frequency of the slave data processing units 130 is not reduced is an optional operating mode of the IC 100, which may be omitted from the IC 100 in some embodiments.

In these embodiments, the slave data processing units 130 may be permanently operated at a reduced frequency, which frequency may be dynamically adjusted based on the number M of instructions to be executed in parallel. For instance, the operating frequency of the slave data processing units 130 may be increased from a default operating frequency of f_{full}/N to f_{full}/M if M<N. Alternatively, the operating frequency of the N slave data processing units 130 may be permanently scaled to f_{full}/N, e.g. when N=2 or when a guaranteed throughput is not a requirement as previously explained.

In summary, at least some embodiments of the IC 100 provide a novel approach to implementing instruction level parallelism based on the primary goal of power reduction, which avoids the previously consequential reduction in throughput performance. However, the contemplated embodiments are not limited to such objectives. Embodiments of the IC 100 may advantageously be applied in generic systems where the primary goal varies between throughput performance and energy reduction, depending on the scenario in which the system will be deployed.

The IC 100 according to one or more of the previously described embodiments may be advantageously be integrated in electronic devices in which such objectives may be applicable, e.g. battery-powered devices. Non-limiting examples of such electronic devices include desktop computers, laptop computers, tablet computers, mobile phones, smart phones, personal digital assistants, GPS navigation devices, identification devices, automotive devices, domestic appliances and so on. Because battery life and performance are key performance indicators of such electronic devices, such that the integration of the IC 100 according to one or more of the aforementioned embodiments in such devices can significantly improve the market appeal of the device.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. An integrated circuit (100) configurable to operate in a full power mode or to operate in a reduced power mode, comprising:
a set of data processing units (120, 130) including a first data processing unit (120) operable at a full operating frequency and N second data processing units (130) operable at a reduced operating frequency in the reduced power mode of operation of the integrated circuit, wherein N is an integer having a value of at least 2;
an instruction scheduler (110) adapted to evaluate dependencies between individual instructions in a received plurality of instructions to identify dependent instructions and independent instructions in said plurality of instructions; **characterized in that**:
in the reduced power mode of operation, the instruction scheduler is adapted to :
assign the dependent instructions to the first data processing unit (120) for serial execution on the first data processing unit at the full operating frequency; and
assign the independent instructions to the plurality of second data processing units (130) for parallel execution on said second data processing units at the reduced operating frequency.

2. The integrated circuit (100) of claim 1, wherein the reduced operating frequency is defined such that the throughput of independent instructions executed by the plurality of second data processing units (130) matches the throughput of dependent instructions executed by the first data processing unit (120) or at most differs from the throughput of dependent instructions executed by the first data processing unit by less than a defined threshold.

3. The integrated circuit (100) of claim 1 or 2, wherein the instruction scheduler (110) is further adapted to generate a control signal (116) indicative of the presence of said dependencies, the integrated circuit further comprising a controller (150) for adjusting said operating frequency in response to said control signal.

4. The integrated circuit (100) of claim 3, wherein the controller (150) is arranged to define the reduced operating frequency as a function of the number of independent instructions to be executed in parallel on said second data processing units (130).

5. The integrated circuit (100) of claim 4, wherein the operating frequency of each second data processing unit (130) is individually defined, and wherein
the controller is arranged to define the reduced operating frequency of a subset of said second data processing units, the number of second data processing units in said subset matching the number of independent instructions in said received plurality of instructions.

6. The integrated circuit (100) of any of claims 3-5, wherein the controller (150) is adapted to define said reduced operating frequency by controlling the voltage of the second data processing units (130) in response to said control signal (116).

7. The integrated circuit of any of claims 3-6, wherein the controller (150) is further adapted to:
provide a clock gating signal to the second data processing units (130) during execution of the dependent instructions; and/or
provide a clock gating signal to the first data processing unit (120) during execution of the independent instructions.

8. The integrated circuit (100) of any of claims 1-7, wherein the instruction scheduler (110) is further adapted to:
send no-operation (NOP) instructions to the second data processing units (130) during execution of the dependent instructions; and/or
send no-operation (NOP) instructions to the first data processing unit (120) during execution of the independent instructions.

9. The integrated circuit (100) of any of claims 1-8, further comprising:
a memory (170) for storing said instructions; and
a data communication bus (160) between the memory and the instruction scheduler (110); wherein:
the memory is adapted to receive a memory address from an address generation unit (120);
the instruction scheduler is adapted to receive the plurality of instructions corresponding to said memory address from said memory over said data communication bus; and
wherein the number of instructions in said plurality is a multiple of N.

10. The integrated circuit (100) of claim 9, wherein the instruction scheduler (110) further comprises a first buffer (112) for storing the received plurality of instructions and a second buffer (114) for storing the dependent instructions within said received plurality.

11. The integrated circuit (100) of any of claims 1-10, further comprising a program counter controller adapted to update a program counter in response to the control signal (116).

12. The integrated circuit (100) of claim 11, wherein the first data processing unit (120) comprises an interrupt handler, and wherein the program counter controller is further responsive to the interrupt handler.

13. The integrated circuit (100) of any of claims 1-12, wherein the second data processing units (130) are permanently operable at a reduced operating frequency.

14. An electronic device comprising the integrated circuit (100) of any of claims 1-13.

15. A method of operating an integrated circuit according to any of claims 1-13, the method comprising:
determining a power mode of operation of the integrated circuit, being a full power mode, or a reduced power mode;
evaluating dependencies between individual instructions in the plurality of instructions to identify dependent instructions and independent instructions in said plurality of instructions; **characterized by**:
when operating in the reduced power mode:
assigning the dependent instructions to the first data processing unit;
assigning the independent instructions to the plurality of second data processing units for parallel execution on said second data processing units;
executing the dependent instructions on the first data processing unit at the full operating frequency; and
executing the independent instructions on the second data processing units at the reduced operating frequency.

## Patentansprüche

1. Ein integrierter Schaltkreis (100), welcher konfigurierbar ist zum Operieren in einem volle Leistung Modus oder zum Operieren in einem reduzierte Leistung Modus, der integrierte Schaltkreis (100) aufweisend:
einen Satz von Datenverarbeitungseinheiten (120, 130), welche umfassen eine erste Datenverarbeitungseinheit (120), welche betriebsfähig ist bei einer vollen Betriebsfrequenz und, N zweite Datenverarbeitungseinheiten (130), welche betriebsfähig sind bei einer reduzierten Betriebsfrequenz in dem reduzierten Leistungsmodus für den Betrieb von dem integrierten Schaltkreis,
wobei N eine Ganzzahl ist, welche einen Wert von mindestens 2 hat;
einen Instruktion Scheduler (110), welcher adaptiert ist zum Evaluieren von Abhängigkeiten zwischen individuellen Instruktionen in einer empfangenen Mehrzahl von Instruktionen zum Identifizieren von abhängigen Instruktionen und unabhängigen Instruktionen in der Mehrzahl von Instruktionen;
**dadurch gekennzeichnet, dass**:
in dem reduzierten Leistungsmodus für den Betrieb, der Instruktion Scheduler adaptiert ist zum:
Übertragen der abhängigen Instruktionen zu der ersten Datenverarbeitungseinheit (120) für eine serielle Ausführung auf der ersten Datenverarbeitungseinheit bei der vollen Betriebsfrequenz; und
Übertragen der unabhängigen Instruktionen zu der Mehrzahl von zweiten Datenverarbeitungseinheiten (130) für eine parallele Ausführung auf den zweiten Datenverarbeitungseinheiten bei der reduzierten Betriebsfrequenz.

2. Der integrierte Schaltkreis (100) gemäß Anspruch 1,
wobei die reduzierte Betriebsfrequenz definiert ist, sodass der Durchsatz von unabhängigen Instruktionen, welche ausgeführt werden mittels der Mehrzahl von zweiten Datenverarbeitungseinheiten (130), übereinstimmt mit dem Durchsatz von abhängigen Instruktionen, welche ausgeführt werden mittels der ersten Datenverarbeitungseinheit (120), oder maximal abweicht von dem Durchsatz von abhängigen Instruktionen, welche ausgeführt werden mittels der ersten Datenverarbeitungseinheit, um weniger als eine definierte Schwelle.

3. Der integrierte Schaltkreis (100) gemäß Anspruch 1 oder 2,
wobei der Instruktion Scheduler (110) ferner adaptiert ist zum Generieren eines Steuersignals (116), welches indikativ ist für die Präsenz von den Abhängigkeiten,
wobei der integrierte Schaltkreis ferner aufweist einen Kontroller (150) zum Einstellen der Betriebsfrequenz als Antwort auf das Steuersignal.

4. Der integrierte Schaltkreis (100) gemäß Anspruch 3,
wobei der Kontroller (150) eingerichtet ist zum Definieren der reduzierten Betriebsfrequenz als eine Funktion von der Anzahl von unabhängigen Instruktionen, welche ausgeführt werden parallel auf den zweiten Datenverarbeitungseinheiten (130).

5. Der integrierte Schaltkreis (100) gemäß Anspruch 4,
wobei die Betriebsfrequenz von jeder der zweiten Datenverarbeitungseinheiten (130) individuell definiert ist, und
wobei der Kontroller eingerichtet ist zum Definieren der reduzierten Betriebsfrequenz von einer Teilmenge von den zweiten Datenverarbeitungseinheiten,
wobei die Anzahl von zweiten Datenverarbeitungseinheiten in der Teilmenge übereinstimmt mit der Anzahl von unabhängigen Instruktionen in der empfangenen Mehrzahl von Instruktionen.

6. Der integrierte Schaltkreis (100) gemäß irgendeinem der Ansprüche 3 bis 5,
wobei der Kontroller (150) adaptiert ist zum Definieren der reduzierten Betriebsfrequenz mittels Steuerns der Spannung von den zweiten Datenverarbeitungseinheiten (130) als Antwort auf das Steuersignal (116).

7. Der integrierte Schaltkreis (100) gemäß irgendeinem der Ansprüche 3 bis 6,
wobei der Kontroller (150) ferner adaptiert ist zum:
Bereitstellen eines Takt Ansteuerungssignal zu den zweiten Datenverarbeitungseinheiten (130) während einer Ausführung von den abhängigen Instruktionen; und/oder
Bereitstellen eines Takt Ansteuerungssignal zu der ersten Datenverarbeitungseinheit (120) während einer Ausführung von den unabhängigen Instruktionen.

8. Der integrierte Schaltkreis (100) gemäß irgendeinem der Ansprüche 1 bis 7,
wobei der Instruktion Scheduler (110) ferner adaptiert ist zum:
Senden von Nulloperation (NOP) Instruktionen zu den zweiten Datenverarbeitungseinheiten (130) während einer Ausführung von den abhängigen Instruktionen; und/oder
Senden von Nulloperation (NOP) Instruktionen zu der ersten Datenverarbeitungseinheit (120) während einer Ausführung von den unabhängigen Instruktionen.

9. Der integrierte Schaltkreis (100) gemäß irgendeinem der Ansprüche 1 bis 8, ferner aufweisend:
einen Speicher (170) zum Speichern der Instruktionen; und
einen Daten Kommunikationsbus (160) zwischen dem Speicher und dem Instruktion Scheduler (110); wobei:
der Speicher adaptiert ist zum Empfangen einer Speicheradresse von einer Adresse Generierungseinheit (120);
der Instruktion Scheduler adaptiert ist zum Empfangen der Mehrzahl von Instruktionen, welche korrespondieren zu der Speicheradresse von dem Speicher, über den Daten Kommunikationsbus; und
wobei die Anzahl von Instruktionen in der Mehrzahl ein Vielfaches von N ist.

10. Der integrierte Schaltkreis (100) gemäß Anspruch 9,
wobei der Instruktion Scheduler (110) ferner aufweist einen ersten Puffer (112) zum Speichern der empfangenen Mehrzahl von Instruktionen und einen zweiten Puffer (114) zum Speichern der abhängigen Instruktionen innerhalb der empfangenen Mehrzahl.

11. Der integrierte Schaltkreis (100) gemäß irgendeinem der Ansprüche 1 bis 10, ferner aufweisend
einen Programmzähler Kontroller, welcher adaptiert ist zum Aktualisieren eines Programmzählers als Antwort auf das Steuersignal (116).

12. Der integrierte Schaltkreis (100) gemäß Anspruch 11,
wobei die erste Datenverarbeitungseinheit (120) aufweist einen Interrupt Handhaber, und wobei der Programmzähler Kontroller ferner reagierend ist auf den Interrupt Handhaber.

13. Der integrierte Schaltkreis (100) gemäß irgendeinem der Ansprüche 1 bis 12,
wobei die zweiten Datenverarbeitungseinheiten (130) permanent betriebsfähig sind bei einer reduzierten Betriebsfrequenz.

14. Eine elektronische Vorrichtung aufweisend den integrierten Schaltkreis (100) gemäß irgendeinem der Ansprüche 1 bis 13.

15. Ein Verfahren zum Betreiben eines integrierten Schaltkreises gemäß irgendeinem der Ansprüche 1 bis 13, das Verfahren aufweisend:
Bestimmen eines Leistungsmodus für einen Betrieb von dem integrierten Schaltkreis, welcher ein volle Leistung Modus oder ein reduzierte Leistung Modus ist;
Evaluieren von Abhängigkeiten zwischen individuellen Instruktionen in der Mehrzahl von Instruktionen zum Identifizieren von abhängigen Instruktionen und unabhängigen Instruktionen in der Mehrzahl von Instruktionen;
**gekennzeichnet durch**:
wenn betreiben in dem reduzierten Leistungsmodus:
Übertragen der abhängigen Instruktionen zu der ersten Datenverarbeitungseinheit;
Übertragen der unabhängigen Instruktionen zu der Mehrzahl von zweiten Datenverarbeitungseinheiten für eine parallele Ausführung auf den zweiten Datenverarbeitungseinheiten;
Ausführen der abhängigen Instruktionen auf der ersten Datenverarbeitungseinheit bei der vollen Betriebsfrequenz; und
Ausführen der unabhängigen Instruktionen auf den zweiten Datenverarbeitungseinheiten bei der reduzierten Betriebsfrequenz.

## Revendications

1. Circuit intégré (100) configurable pour fonctionner dans un mode à pleine puissance ou pour fonctionner dans un mode à puissance réduite, comprenant :
un ensemble d'unités de traitement de données (120, 130) comprenant une première unité de traitement de données (120) pouvant fonctionner à pleine fréquence de fonctionnement et N secondes unités de traitement de données (130) pouvant fonctionner à une fréquence de fonctionnement réduite dans le mode de fonctionnement à puissance réduite du circuit intégré, dans laquelle N est un nombre entier ayant une valeur d'au moins 2 ;
un programmateur d'instructions (110) destiné à évaluer les dépendances entre des instructions individuelles dans une pluralité d'instructions reçues pour identifier des instructions dépendantes et des instructions indépendantes dans ladite pluralité d'instructions ;
**caractérisé en ce que** :
dans le mode de fonctionnement à puissance réduite, le programmateur d'instructions est destiné à :
affecter les instructions dépendantes à la première unité de traitement de données (120) pour une exécution en série sur la première unité de traitement de données à pleine fréquence de fonctionnement ; et
affecter les instructions indépendantes à la pluralité de secondes unités de traitement de données (130) pour une exécution en parallèle sur lesdites secondes unités de traitement de données à la fréquence de fonctionnement réduite.

2. Circuit intégré (100) selon la revendication 1, dans lequel la fréquence de fonctionnement réduite est définie de telle sorte que le débit d'instructions indépendantes exécutées par la pluralité de secondes unités de traitement de données (130) corresponde au débit d'instructions dépendantes exécutées par la première unité de traitement de données (120) ou tout au plus diffère du débit des instructions dépendantes exécutées par la première unité de traitement de données de moins d'un seuil défini.

3. Circuit intégré (100) selon la revendication 1 ou 2, dans lequel le programmateur d'instructions (110) est en outre en mesure de générer un signal de commande (116) indiquant la présence desdites dépendances, le circuit intégré comprenant en outre un dispositif de contrôle (150) pour ajuster ladite fréquence de fonctionnement en réponse audit signal de commande.

4. Circuit intégré (100) selon la revendication 3, dans lequel le dispositif de contrôle (150) est agencé pour définir la fréquence de fonctionnement réduite en fonction du nombre d'instructions indépendantes à exécuter en parallèle sur lesdits seconds unités de traitement de données (130).

5. Circuit intégré (100) selon la revendication 4, dans lequel la fréquence de fonctionnement de chaque second unités de traitement de données (130) est définie individuellement, et dans lequel le dispositif de contrôle est agencé pour définir la fréquence de fonctionnement réduite d'un sous-ensemble desdits seconds éléments de traitement de données, le nombre de seconds éléments de traitement de données dans ledit sous-ensemble correspondant au nombre d'instructions indépendantes de ladite pluralité d'instructions reçues.

6. Circuit intégré (100) selon l'une quelconque des revendications 3 à 5, dans lequel le dispositif de contrôle (150) est destiné à définir ladite fréquence de fonctionnement réduite en contrôlant la tension des secondes unités de traitement de données (130) en réponse audit signal de commande (116).

7. Circuit intégré selon l'une quelconque des revendications 3 à 6, dans lequel le dispositif de contrôle (150) est en outre en mesure de :
fournir un signal de synchronisation d'horloge aux secondes unités de traitement de données (130) pendant l'exécution des instructions dépendantes ; et/ou
fournir un signal de synchronisation d'horloge à la première unité de traitement de données (120) pendant l'exécution des instructions indépendantes.

8. Circuit intégré (100) selon l'une quelconque des revendications 1 à 7, dans lequel le programmateur d'instructions (110) est en outre en mesure :
d'envoyer des instructions sans opération (NOP) aux secondes unités de traitement de données (130) pendant l'exécution des instructions dépendantes ; et/ou d'envoyer des instructions sans opération (NOP) à la première unité de traitement de données (120) pendant l'exécution des instructions indépendantes.

9. Circuit intégré (100) selon l'une quelconque des revendications 1 à 8, comprenant en outre :
une mémoire (170) pour stocker lesdites instructions ; et
un bus de communication de données (160) entre la mémoire et le programmateur d'instructions (110) ; dans lequel :
la mémoire est en mesure de recevoir une adresse de mémoire provenant d'une unité de génération d'adresses (120) ;
le programmateur d'instructions est en mesure de recevoir la pluralité d'instructions correspondant à ladite adresse de mémoire à partir de ladite mémoire sur ledit bus de communication de données ; et
dans lequel le nombre d'instructions de ladite pluralité est un multiple de N.

10. Circuit intégré (100) selon la revendication 9, dans lequel le programmateur d'instructions (110) comprend en outre une première mémoire tampon (112) pour stocker la pluralité d'instructions reçues et une seconde mémoire tampon (114) pour stocker les instructions dépendantes à l'intérieur de ladite pluralité reçue.

11. Circuit intégré (100) selon l'une quelconque des revendications 1 à 10, comprenant en outre un dispositif de contrôle de compteur de programme en mesure de mettre à jour un compteur de programme en réponse au signal de commande (116).

12. Circuit intégré (100) selon la revendication 11, dans lequel la première unité de traitement de données (120) comprend un gestionnaire d'interruption, et dans lequel le dispositif de contrôle de compteur de programme répond en outre au gestionnaire d'interruption.

13. Circuit intégré (100) selon l'une quelconque des revendications 1 à 12, dans lequel les secondes unités de traitement de données (130) peuvent fonctionner de manière permanente à une fréquence de fonctionnement réduite.

14. Dispositif électronique comprenant le circuit intégré (100) selon l'une quelconque des revendications 1 à 13.

15. Procédé de fonctionnement d'un circuit intégré selon l'une quelconque des revendications 1 à 13, le procédé comprenant :
la détermination d'un mode de puissance de fonctionnement du circuit intégré, comme mode à pleine puissance ou mode à puissance réduite ;
l'évaluation des dépendances entre des instructions individuelles de la pluralité d'instructions pour identifier des instructions dépendantes et des instructions indépendantes dans ladite pluralité d'instructions ;
**caractérisé par** :
lors du fonctionnement en mode à puissance réduite :
l'affectation des instructions dépendantes à la première unité de traitement de données ;
l'affectation des instructions indépendantes à la pluralité de secondes unités de traitement de données pour une exécution en parallèle sur lesdites secondes unités de traitement de données ;
l'exécution des instructions dépendantes sur la première unité de traitement de données à la pleine fréquence de fonctionnement ; et
l'exécution des instructions indépendantes sur les secondes unités de traitement de données à la fréquence de fonctionnement réduite.
